# EUROPÄISCHE PATENTANMELDUNG

(11) **EP 3 045 880 A1**
(43) Veröffentlichungstag der Anmeldung: **20.07.2016**
(21) Anmeldenummer: 15151201.9
(22) Anmeldetag: 14.01.2015
(51) Int. Cl.: G01F 23/296

(54) **Grenzstandmessanordnung**

(71) Anmelder: VEGA Grieshaber KG, 77709 Wolfach (DE)
(72) Erfinder: Ohmayer, Gerd, 77716 Haslach (DE); Becherer, Frank, 77743 Neuried-Ichenheim (DE)
(74) Vertreter: Westphal, Mussgnug & Partner Patentanwälte mbB

(57) **Zusammenfassung**

Grenzstandmessanordnung (1) mit modularem Aufbau, aufweisend einen vorderseitig an einem Systemgehäuse (3) angeordneten Grenzstandsensor (5), ein in dem Systemgehäuse (3) angeordnetes Elektronikgehäuse (7) mit einer Messelektronik, die mit dem Grenzstandsensor(5) verbunden ist, sowie ein an dem Systemgehäuse (3) angeordnetes Verlängerungsrohr (9) zur Anordnung des Grenzstandsensors (5) in einem Behälter.

## Beschreibung

Die vorliegende Erfindung betrifft eine Grenzstandmessanordnung.

Aus dem Stand der Technik sind verschiedene Grenzstandmessanordnungen bekannt, bei denen an einem Messrohr vorderseitig ein Grenzstandsensor, beispielsweise ein piezoelektrisch angetriebener Vibrationssensor angeordnet ist. Rückseitig ist an dem Messrohr eine über eine Messleitung mit dem Grenzstandsensor verbundene Messelektronik in einem entsprechenden Elektronikgehäuse montiert.

Grenzstandmessanordnungen werden in vielen Bereichen der Prozesstechnik beispielsweise in der Lebensmittelindustrie, pharmazeutischen Industrie oder chemischen Industrie zur Überwachung von Grenzständen von Flüssigkeiten oder Schüttgütern eingesetzt. Hierzu werden die bekannten Grenzstandmessanordnungen mit einem Grenzstandsensor, beispielsweise einem mit einem piezoelektrischen oder elektromagnetischen Antrieb versehenen Gabelresonator, auf Höhe des zu überwachenden Grenzstandes angeordnet. In vielen Fällen werden die entsprechenden Grenzstandsensoren von der Oberseite eines Behälters her eingeführt und über ein Messrohr, an dem sie angeordnet sind, auf Höhe des zu überwachenden Grenzstandes positioniert.

Die Anordnung eines derartigen Grenzstandsensors ist gemäß dem Stand der Technik auf verschiedenen Füllhöhen erfolgt über eine sogenannte Arretierverschraubung, d. h. eine das Messrohr abdichtend einklemmende und mit einem Behälter verbundene Klemmvorrichtung. Da eine entsprechende Klemmvorrichtung einerseits für hohe Drücke eine Abdichtung des Behälters gewährleisten und andererseits beispielsweise für hygienekritische Anwendungen, beispielsweise im Lebensmittel-, Pharmazie- oder Chemiesektor eine gute Reinigbarkeit gewährleisten muss weist diese einen vergleichsweise komplexen Aufbau mit mehreren Klemmabschnitten und dazwischen angeordneten Dichtungen auf. Ferner bedingt die aus dem Stand der Technik bekannte Konstruktion aufgrund der vorkonfektionierten Längen der Grenzstandmessanordnung, das - abhängig von einer gewünschten Positionierung des Grenzstandsensors innerhalb der Behälters - ein variierend langer Abschnitt des Messrohrs sowie die daran angeordnete Messelektronik außerhalb des Behälters angeordnet ist.

An den aus dem Stand der Technik bekannten Grenzstandmessanordnungen wird einerseits die aufwändige Klemmanordnung zur Anordnung der Grenzstandmessanordnungen in dem Behälter und andererseits der große Platzbedarf der Grenzstandmessanordnung außerhalb des Behälters als nachteilig empfunden.

Es ist die Aufgabe der vorliegenden Erfindung eine Grenzstandmessanordnung zur Verfügung zu stellen, die diese Nachteile nicht aufweist.

Diese Aufgabe wird durch eine Grenzstandmessanordnung mit den Merkmalen des Patentanspruchs 1 gelöst.

Eine erfindungsgemäße Grenzstandmessanordnung weist einen modularen Aufbau auf, wobei vorderseitig an einem Systemgehäuse ein Grenzstandsensor angeordnet ist. In dem Systemgehäuse ist ein Elektronikgehäuse mit einer Messelektronik angeordnet, die mit dem Grenzstandsensor verbunden ist, wobei an dem Systemgehäuse ferner ein Verlängerungsrohr zur Anordnung des Grenzstandsensors in einem Behälter angeordnet ist.

Durch einen erfindungsgemäßen Grenzstandsensor mit modularem Aufbau kann eine kompakte Bauform der Grenzstandmessanordnung mit weitgehend standardisierten Bauteilen erreicht werden. Insbesondere durch die Anordnung des Grenzstandsensors an dem Systemgehäuse sowie der Messelektronik in dem Systemgehäuse kann erreicht werden, dass der durch die Grenzstandmessanordnung außerhalb eines Behälters benötigte Bauraum auf ein Minimum reduziert wird. Idealerweise ist es durch den erfindungsgemäßen Aufbau möglich, das rückseitig an dem Systemgehäuse angeordnete Verlängerungsrohr auf die benötigte Länge zur Anordnung des Grenzstandsensors an dem zu überwachenden Grenzstand anzulangen und somit außerhalb des Behälters annähernd keinen Bauraum zu benötigen. Ferner wird durch die erfindungsgemäße Anordnung die Möglichkeit geschaffen, das Verlängerungsrohr direkt mit dem Behälter zu verbinden, beispielsweise zu verschweißen, so dass auf aufwändige druckdichte Klemmanordnungen verzichtet werden kann.

Ein leichter und kostengünstiger Aufbau des Systemgehäuses kann erreicht werden, wenn dieses einen aus Blech ausgebildeten Gehäusemantel aufweist. Der Gehäusemantel kann dafür beispielsweise als Tiefziehteil, Hydroformteil oder gerundetes längsnahtgeschweisstes Blechteil ausgebildet sein. Auf diese Weise kann mittels kostengünstiger Herstellungsmethoden ein leichtes und dennoch stabiles Systemgehäuse aufgebaut werden.

Vorzugsweise ist der Gehäusemantel vorderseitig mit dem Grenzstandsensor verklebt, verlötet oder verschweißt. Auf diese Weise kann der Grenzstandsensor, der beispielsweise als Vibrationssensor ausgebildet sein kann, kostengünstig und ohne den Einsatz von Dichtungen mit dem Systemgehäuse verbunden werden. Eine dichtungsfreie und dennoch diffusionsdichte Befestigung des Grenzstandsensors an dem Systemgehäuse ist insbesondere bei hygienekritischen Anwendungen im Lebensmittelbereich, dem pharmazeutischen Bereich oder dem chemischen Bereich wichtig.

Eine Schweißnaht zwischen dem Gehäusemantel und dem Grenzstandsensor kann daher insbesondere überschliffen und poliert sein, so dass durch die Verbindung von Gehäusemantel und Grenzstandsensor keinerlei Spalte oder anderweitige Ablagerungsmöglichkeiten für Keime oder dergleichen gebildet werden.

Rückseitig ist an dem Systemgehäuse vorzugsweise eine Abschlusskappe mit einer Kabeldurchführung angeordnet. Die Abschlusskappe kann beispielsweise als Drehteil ausgebildet sein und ist vorzugsweise mit dem Gehäusemantel verlötet oder verschweißt.

Durch die Ausgestaltung der Abschlusskappe als Drehteil kann diese sehr gut als Verbindungselement zu dem rückseitig angeordneten Verlängerungsrohr genutzt werden. Eine Verbindung zwischen der Abschlusskappe und dem Gehäusemantel kann beispielsweise durch Verschweißen oder Verlöten hergestellt werden.

Das Verlängerungsrohr kann mit dem Systemgehäuse vorzugsweise der Endkappe verschraubt und/oder verklebt sein. Zusätzlich oder alternativ kann das Verlängerungsrohr mit dem Systemgehäuse, vorzugsweise der Endkappe auch verschweißt sein.

Eine Auswahl der Verbindungstechnik zwischen Verlängerungsrohr und Systemgehäuse erfolgt in der Regel nach den prozessseitigen Anforderungen hinsichtlich Spaltfreiheiten und Diffusionsdichtigkeit. Eine Schraubverbindung zwischen dem Verlängerungsrohr und beispielsweise der Endkappe erlaubt einen flexibleren Einsatz der Grenzstandmessanordnung, da diese beispielsweise durch einen Austausch des Verlängerungsrohrs auf unterschiedlichen Grenzständen eingesetzt werden kann. Wird eine hohe Diffusionsdichtigkeit und/oder Spaltfreiheit der Grenzmessanordnung gewünscht, so ist eine Schweißverbindung zwischen beispielsweise der Abschlusskappe und dem Verlängerungsrohr eine gute Möglichkeit, eine hermetische Kapselung und optimale Reinigbarkeit der Grenzstandmessanordnung zu erreichen.

Eine besonders gute Einsetzbarkeit der Grenzstandmessanordnung in hygienekritischen Anwendungen kann erreicht werden, wenn das Systemgehäuse rotationssymmetrisch ausgebildet ist. Durch eine rotationssymmetrische Ausgestaltung des Systemgehäuses, d. h. insbesondere des Gehäusemantels, der Abschlusskappe sowie des Übergangsbereichs zu dem Grenzstandsensor kann eine Anordnung geschaffen werden, die insbesondere spalt- und hinterschnittfrei ausgestaltet sein kann und deren Oberfläche einfach mit einer Oberflächenveredelung versehen werden kann. In diesem Zusammenhang kann es beispielsweise sinnvoll sein, das Systemgehäuse zu polieren und/oder zu beschichten.

Bei einer Anordnung der Messelektronik Respektive des Elektronikgehäuses in dem Systemgehäuse, welches dann direkt angrenzend an den Grenzstandsensor in der Prozessumgebung platziert ist, kann es notwendig sein, das Systemgehäuse oder das Elektronikgehäuse mit einer geeigneten Kühlung zum Schutz der darin angeordneten Elektronik zu versehen. Dies kann insbesondere dann notwendig sein, wenn die eingesetzte Elektronik die permanent herrschenden Prozesstemperaturen und/oder die bei einer Reinigung des Behälters und der Grenzstandmessanordnung teilweise vorherrschenden Temperaturen von bis zu 150°C nicht dauerhaft schadlos übersteht.

Die vorliegende Erfindung wird nachfolgend unter Bezugnahme auf die beigefügten Figuren anhand eines Ausführungsbeispiels eingehend erläutert.

Es zeigen:
- Figur 1:: einen Längsschnitt durch eine Grenzstandmessanordnung mit modularem Aufbau und
- Figur 2:: eine perspektivische Ansicht der Grenzstandmessanordnung aus Figur 1.

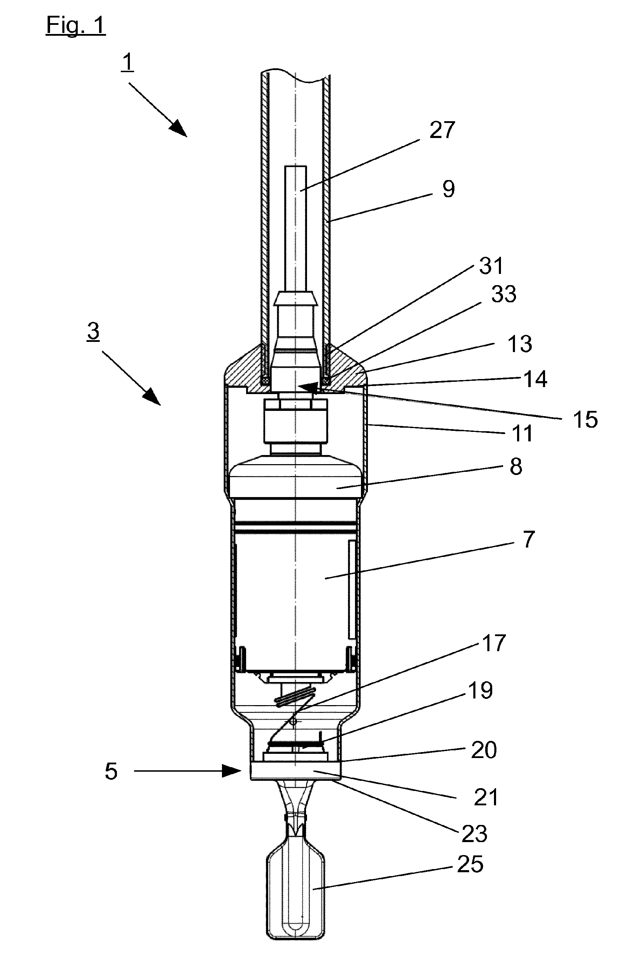

Figur 1 zeigt einen Längsschnitt durch eine Grenzstandmessanordnung 1 gemäß der vorliegenden Anmeldung.

An einem Systemgehäuse 3 ist vorderseitig ein Grenzstandsensor 5 über eine umlaufende Schweißnaht 20 angeordnet. Das Systemgehäuse 3 weist einen rohrförmigen Gehäusemantel 11 auf, der im vorliegenden Ausführungsbeispiel aus einem dünnwandigen Blech, beispielsweise als Tiefziehteil , Hydroformteil oder gerundetem längsnahtgeschweissten Blechteil ausgebildet ist. Der Gehäusemantel 11 ist vorderseitig umlaufend mit einem Übergangsstück 21 des Grenzstandsensors 5 beispielweise einen umlaufenden Schweißrand, verschweißt. An dem Übergangsstück 21 ist eine senkrecht zu einer Längsachse des Systemgehäuses ausgerichtete Membran 23 angeordnet, die durch einen innenseitig angeordneten Antrieb 19, beispielsweise einen piezoelektrischen Antrieb, zu einer Schwingung anregbar ist. Außenseitig sind an der Membran 23 zwei mechanische Schwinger 25 in Form von Paddeln angeordnet. Aufgrund der durch den Antrieb 19 angeregten Schwingung der Membran 23 schwingen die mechanischen Schwinger 25, abhängig von einem sie umgebenden Medium in einer bestimmten Frequenz, so dass durch eine Messung dieser Resonanzfrequenz der mechanischen Schwinger 25 beispielsweise darauf geschlossen werden kann, ob diese in Luft schwingen oder von einer Flüssigkeit oder einem Schüttgut bedeckt sind. Auf diese Weise kann ein Grenzstand detektiert werden.

Der Antrieb 19 ist für einen sogenannten Flexleiter 17 oder eine andere geeignete elektrische Verbindung mit einer Messelektronik, die vorliegend in einem Elektronikgehäuse 7 angeordnet ist, verbunden. Das Elektronikgehäuse 7 ist im vorliegenden Ausführungsbeispiel in Radialrichtung formschlüssig in dem Systemgehäuse 3 aufgenommen und damit zentriert angeordnet. In Axialrichtung weist das Elektronikgehäuse 7 rückseitig einen Deckel 8 auf, der an einer Verjüngung des Systemgehäuses 3 anschlägt, welches damit ein Wiederlager für das Elektronikgehäuse 7 in Axialrichtung A darstellt. Alternativ oder zusätzlich kann das Elektronikgehäuse 7 auch durch eine Verklebung oder einen Verguss in dem Systemgehäuse 3 fixiert sein.

Rückseitig ist das Systemgehäuse 3 durch eine Abschlusskappe 13, welche umlaufend mit dem Gehäusemantel 11 verschweißt ist, abgeschlossen. Eine Schweißnaht oder Lötnaht 14 zwischen der Abschlusskappe 13 und dem Gehäusemantel 11 ist im vorliegenden Ausführungsbeispiel ebenfalls überschliffen und poliert, so dass eine spaltfreie und diffusionsdichte Verbindung geschaffen ist.

Die Abschlusskappe 13 ist im vorliegenden Ausführungsbeispiel im Wesentlichen kalottenförmig und als Drehteil ausgebildet, wobei die in Axialrichtung A eine Öffnung 15 zur Durchführung eines Messkabels 27 aufweist. Diese Öffnung 15 kann gleichzeitig eine Zugentlastung für das Messkabel 27 ausbilden, die beispielsweise durch eine Klemmung erreicht werden kann.

Im vorliegenden Ausführungsbeispiel weist die Abschlusskappe 13 ein Innengewinde auf, das zu einem an dem Verlängerungsrohr 9 ausgebildeten Außengewinde korrespondierend ausgebildet ist. Eine hierdurch zwischen der Abschlusskappe 13 und dem Verlängerungsrohr 9 gebildete Schraubverbindung 31 ist so ausgebildet, dass eine in Axialrichtung A bodenseitig in dem Innengewinde angeordnete Dichtung 33, beispielsweise ein O-Ring bei einem Verschrauben des Verlängerungsrohrs 9 mit der Abschlusskappe 13 durch das eingeschraubte Verlängerungsrohr 9 komprimiert wird und dadurch eine Klemmwirkung auf das Messkabel 27 entsteht. Auf diese Weise kann die Messelektronik in dem Elektronikgehäuse 7 gegenüber dem Messkabel 27 zugentlastet werden.

Alternativ zu der Schraubverbindung 31 kann das Verlängerungsrohr 9 mit der Abschlusskappe 13 auch verschweißt sein. Auf diese Weise wird zwar eine leichte Auswechselbarkeit des Verlängerungsrohrs 9 und damit eine Längenvariation der vorliegenden Grenzmessanordnung 1 verhindert, es kann aber eine hermetisch gekapselte Grenzstandmessanordnung 1 ohne jegliche Spalte und Dichtungen innerhalb der Prozessumgebung geschaffen werden, die dadurch optimal für hygienekritische Anwendungen geeignet ist.

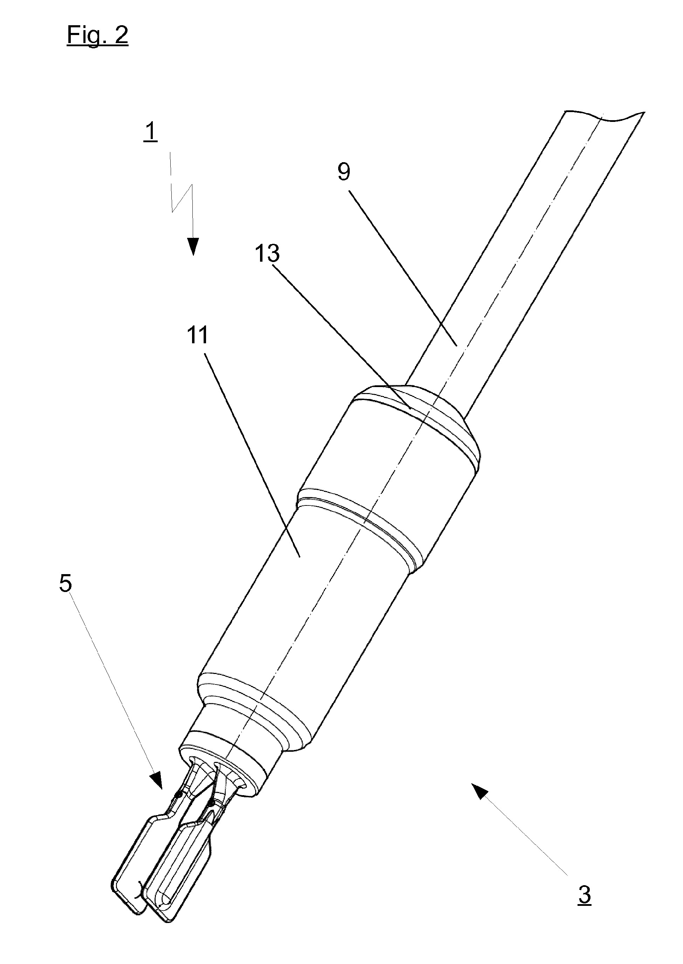

In Figur 2 ist eine perspektivische Darstellung der Grenzstandmessanordnung 1 aus Figur 1 gezeigt.

In der in Figur 2 wiedergegebenen Ansicht ist die rotationssymmetrische Ausbildung des Systemgehäuses 3 deutlich zu erkennen. Das Systemgehäuse 3 ist auf diese Weise besonders einfach mit einer Oberflächenveredelung, beispielsweise durch Polieren oder Beschichten behandelbar, so dass auch die Oberflächeneigenschaften des Gehäuses optimal an den gewünschten Einsatzzweck angepasst werden können.

In einer besonders bevorzugten Ausgestaltungsform sind sowohl die außenliegenden Komponenten des Grenzstandsensors 5 als auch die außenliegenden Oberflächen des Systemgehäuses 3, vorliegend der Gehäusemantel 11 sowie die Abschlusskappe 13 aus Edelstahl ausgebildet und damit besonders gut für hygienekritische Anwendungen geeignet.

Dadurch, dass die Messelektronik innerhalb des Systemgehäuses 3 angeordnet ist, kann das rückseitig an dem Systemgehäuse 3 angeordnete Verlängerungsrohr 9 sehr einfach abgelängt und beispielsweise in einen Flansch oder direkt die Behälterwandung eingeschweißt werden. Auf diese Weise werden außerhalb des Behälters angeordnete Teile der Grenzstandmessanordnung 1 vollständig vermieden und es ist lediglich das Messkabel 27 zu einer Messwarte oder einem entsprechenden Auswertegerät zu führen.

### Bezugszeichenliste

- 1: Grenzstandmessanordnung
- 3: Systemgehäuse
- 5: Grenzstandssensor
- 7: Elektronikgehäuse
- 8: Deckel
- 9: Verlängerungsrohr
- 11: Gehäusemantel
- 13: Abschlusskappe
- 14: Schweißnaht / Lötnaht
- 15: Öffnung
- 17: Flexleiter
- 19: Antrieb
- 20: Schweißnaht / Lötnaht
- 21: Übergangsstück/Schweissrand
- 23: Membran
- 25: Schwinger
- 27: Messkabel
- 31: Schraubverbindung
- 33: Dichtung

## Patentansprüche

1. Grenzstandmessanordnung (1) mit modularem Aufbau, aufweisend einen vorderseitig an einem Systemgehäuse (3) angeordneten Grenzstandsensor (5), ein in dem Systemgehäuse (3) angeordnetes Elektronikgehäuse (7) mit einer Messelektronik, die mit dem Grenzstandsensor(5) verbunden ist, sowie ein an dem Systemgehäuse (3) angeordnetes Verlängerungsrohr (9) zur Anordnung des Grenzstandsensors (5) in einem Behälter.

2. Grenzstandmessanordnung (1) gemäß Anspruch 1, **dadurch gekennzeichnet, dass** das Systemgehäuse (3) einen aus Blech ausgebildeten Gehäusemantel (11) aufweist.

3. Grenzstandmessanordnung (1) gemäß Anspruch 2, **dadurch gekennzeichnet, dass** der Gehäusemantel (11) und der Grenzstandsensor (5) verschweißt sind.

4. Grenzstandmessanordnung (1) gemäß einem der vorhergehenden Ansprüche, **dadurch gekennzeichnet, dass** das Systemgehäuse (3) rückseitig eine Abschlusskappe (13) mit einer Öffnung (15) aufweist.

5. Grenzstandmessanordnung (1) gemäß Anspruch 4, **dadurch gekennzeichnet, dass** die Abschlusskappe (13) als Drehteil ausgebildet ist.

6. Grenzstandmessanordnung (1) gemäß Anspruch 4 oder 5, **dadurch gekennzeichnet, dass** die Abschlusskappe (13) mit dem Gehäusemantel (11) verschweißt ist.

7. Grenzstandmessanordnung (1) gemäß einem der vorhergehenden Ansprüche, **dadurch gekennzeichnet, dass** das Verlängerungsrohr (9) mit dem Systemgehäuse (3), vorzugsweise mit der Abschlusskappe (13) verschraubt, verschweisst und/oder verklebt ist.

8. Grenzstandmessanordnung(1) gemäß einem der Ansprüche 1 bis 6, **dadurch gekennzeichnet, dass** das Verlängerungsrohr (9) mit dem Systemgehäuse (3), vorzugsweise mit der Abschlusskappe (13) verschweißt ist.

9. Grenzstandmessanordnung (1) gemäß einem der vorhergehenden Ansprüche, **dadurch gekennzeichnet, dass** das Systemgehäuse (3) rotationssymmetrisch ausgebildet ist.

10. Grenzstandmessanordnung (1) gemäß einem der vorhergehenden Ansprüche, **dadurch gekennzeichnet, dass** das Systemgehäuse (3) oberflächenveredelt, insbesondere poliert oder beschichtet ist.

## Geänderte Patentansprüche

### Geänderte Patentansprüche gemäss Regel 137(2) EPÜ.

1. Grenzstandmessanordnung (1) mit modularem Aufbau, aufweisend einen vorderseitig an einem Systemgehäuse (3) angeordneten Grenzstandsensor (5), ein in dem Systemgehäuse (3) angeordnetes Elektronikgehäuse (7) mit einer Messelektronik, die mit dem Grenzstandsensor(5) verbunden ist, sowie ein an dem Systemgehäuse (3) angeordnetes Verlängerungsrohr (9) zur Anordnung des Grenzstandsensors (5) in einem Behälter.

2. Grenzstandmessanordnung (1) gemäß Anspruch 1,
**dadurch gekennzeichnet, dass** das Systemgehäuse (3) einen aus Blech ausgebildeten Gehäusemantel (11) aufweist.

3. Grenzstandmessanordnung (1) gemäß Anspruch 2,
**dadurch gekennzeichnet, dass** der Gehäusemantel (11) und der Grenzstandsensor (5) verschweißt sind.

4. Grenzstandmessanordnung (1) gemäß einem der vorhergehenden Ansprüche,
**dadurch gekennzeichnet, dass** das Systemgehäuse (3) rückseitig eine Abschlusskappe (13) mit einer Öffnung (15) aufweist.

5. Grenzstandmessanordnung (1) gemäß Anspruch 4,
**dadurch gekennzeichnet, dass** die Abschlusskappe (13) als Drehteil ausgebildet ist.

6. Grenzstandmessanordnung (1) gemäß Anspruch 4 oder 5,
**dadurch gekennzeichnet, dass** die Abschlusskappe (13) mit dem Gehäusemantel (11) verschweißt ist.

7. Grenzstandmessanordnung (1) gemäß einem der vorhergehenden Ansprüche,
**dadurch gekennzeichnet, dass** das Verlängerungsrohr (9) mit dem Systemgehäuse (3), vorzugsweise mit der Abschlusskappe (13) verschraubt, verschweisst und/oder verklebt ist.

8. Grenzstandmessanordnung(1) nach einem der vorhergehenden Ansprüche,
**dadurch gekennzeichnet, dass** der Grenzstandsensor (5) ein Vibrationssensor ist.

9. Grenzstandmessanordnung (1) gemäß einem der vorhergehenden Ansprüche,
**dadurch gekennzeichnet, dass** das Systemgehäuse (3) rotationssymmetrisch ausgebildet ist.

10. Grenzstandmessanordnung (1) gemäß einem der vorhergehenden Ansprüche,
**dadurch gekennzeichnet, dass** das Systemgehäuse (3) oberflächenveredelt, insbesondere poliert oder beschichtet ist.
